# EUROPEAN PATENT APPLICATION

(11) **EP 3 207 844 A1**
(43) Date of publication of application: **23.08.2017**
(21) Application number: 16184476.6
(22) Date of filing: 17.08.2016
(51) Int. Cl.: A47L 1/05, H04N 5/247

(54) **CLEANING ROBOT SYSTEM, CLEANING ROBOT AND METHOD FOR CONTROLLING CLEANING ROBOT**

(30) Priority: 16.02.2016 CN 201620123131 U; 16.02.2016 CN 201610087232
(71) Applicant: Jiangsu Midea Cleaning Appliances Co., Ltd., Xiangcheng Economic Development Zone Suzhou, Jiangsu 215100 (CN)
(72) Inventor: CHEN, Yuan, Suzhou, Jiangsu 215100 (CN); ZHU, Xiaogang, Suzhou, Jiangsu 215100 (CN); YUAN, Xiaolong, Suzhou, Jiangsu 215100 (CN)
(74) Representative: Romano, Giuseppe

(57) **Abstract**

The present disclosure provides a cleaning robot system, a cleaning robot and a method for controlling a cleaning robot. The cleaning robot system includes a cleaning robot and a control terminal. The cleaning robot includes a camera set and a WIFI communication component, the camera set is configured to shoot images around the cleaning robot so as to generate panoramic image information, and the WIFI communication component is configured to generate a wireless communication between the cleaning robot and the control terminal so as to send the panoramic image information to the control terminal. The control terminal is configured to perform wireless communication with the WIFI communication component so as to receive the panoramic image information, and to generate a control instruction according to the panoramic image information for controlling the cleaning robot.

## Description

### FIELD

The present disclosure relates to an intelligent electrical apparatus field, and more particularly relates to a cleaning robot system and a cleaning robot.

### BACKGROUD

At present, cleaning robots are more and more welcomed by customers. For example, cleaning robots are used on behalf of users to clean windows.

In the related art, the cleaning robots such as window-cleaning robot are controlled via portable infrared remote controls. However, this control way has at least following defects.

First, the control distance is limited. A common infrared remote control generally has a control distance of about 10m. If the window is higher, or if the user wishes to control the window-cleaning robot to clean windows of different rooms at a same place such as on the sofa, it is difficult to realize control via the infrared remote control due to its limited control distance.

Then, the anti-interference performance is poor. For example, when the window-cleaning robot walks to some corners, there may be some obstacles around the robot which block the infrared ray, and then it is difficult to control the window-cleaning robot via the infrared remote control.

### SUMMARY

The present disclosure aims to overcome at least one of the above problems to some extent.

For this, according to embodiments of the present disclosure, a cleaning robot system is provided. The cleaning robot system includes a cleaning robot and a control terminal. The cleaning robot includes a camera set and a WIFI communication component, the camera set is configured to shoot images around the cleaning robot for generating panoramic image information, and the WIFI communication component is configured to generate a wireless communication between the cleaning robot and the control terminal so as to send the panoramic image information to the control terminal. The control terminal is configured to perform wireless communication with the WIFI communication component so as to receive the panoramic image information, and to generate a control instruction according to the panoramic image information for controlling the cleaning robot.

According to the cleaning robot system of embodiments of the present disclosure, the camera set is used to shoot images around the cleaning robot for generating the panoramic image information, and the WIFI communication component is used to send the panoramic image information to the control terminal, such that the control terminal receives the panoramic image information via the wireless communication with the WIFI communication component, and generates the control instruction according to the panoramic image information for controlling the cleaning robot. In this way, when the cleaning robot is in operation, the user may control the cleaning robot by observing the panoramic image information around the cleaning robot displayed on the control terminal, thus enhancing the safety and convenience of the cleaning robot and improving the user experience.

In an embodiment of the present disclosure, the camera set includes at least four single cameras disposed circlewise on a body of the cleaning robot at a preset angle.

In an embodiment of the present disclosure, the camera set includes four single cameras disposed circlewise on the body of the cleaning robot at intervals of 90°, and each of the four single cameras shoots images within a range of 90° in a facing direction of the single camera.

In an embodiment of the present disclosure, each single camera has a protective cap made of transparent material and in a hemisphere form.

In an embodiment of the present disclosure, the cleaning robot further includes a support assembly configured to install the camera set onto a base of the cleaning robot.

In an embodiment of the present disclosure, the cleaning robot includes a window-cleaning robot.

According to embodiments of the present disclosure, a cleaning robot is provided. The cleaning robot includes: a body; a camera set, disposed on the body and configured to shoot images around the cleaning robot for generating panoramic image information; a WIFI communication component, configured to establish wireless communication with a control terminal; and a control component, connected with the camera set and the WIFI communication component respectively, and configured to generate the panoramic image information according to the images shot by the camera set, to send the panoramic image information to the control terminal via the WIFI communication component, to receive a control instruction sent by the control terminal via the WIFI communication component, and to control the cleaning robot according to the control instruction, in which the control instruction is generated according to the panoramic image information by the control terminal.

According to the cleaning robot of embodiments of the present disclosure, the camera set is used to shoot images around the cleaning robot for generating the panoramic image information, and the WIFI communication component is used to send the panoramic image information to the control terminal, such that the control terminal receives the panoramic image information via the wireless communication with the WIFI communication component, and generates the control instruction according to the panoramic image information for controlling the cleaning robot. In this way, when the cleaning robot is in operation, the user may control the cleaning robot by observing the panoramic image information around the cleaning robot displayed on the control terminal, thus enhancing the safety and convenience of the cleaning robot and improving the user experience.

In an embodiment of the present disclosure, the camera set includes at least four single cameras disposed circlewise on the body of the cleaning robot at a preset angle.

In an embodiment of the present disclosure, the camera set includes four single cameras disposed circlewise on the body of the cleaning robot at intervals of 90°, and each of the four single cameras shoots images within a range of 90° in a facing direction of the single camera.

In an embodiment of the present disclosure, each single camera has a protective cap made of transparent material and in a hemisphere form.

In an embodiment of the present disclosure, the cleaning robot further includes: a support assembly, configured to install the camera set onto a base of the cleaning robot.

In an embodiment of the present disclosure, the cleaning robot includes a window-cleaning robot.

According to embodiments of the present disclosure, a method for controlling a cleaning robot is provided. The method includes: shooting images around the cleaning robot; generating panoramic image information based on the images; generating a control instruction according to the panoramic image information; and controlling the cleaning robot according to the control instruction.

According to embodiments of the present disclosure, a computer program is provided. The computer program, when executing on a processor, performs the above method according to embodiments of the present disclosure.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the present disclosure will become apparent and more readily appreciated from the following descriptions taken in conjunction with the drawings, in which:
Fig. 1 is a block diagram of a cleaning robot system according to an embodiment of the present disclosure;
Fig. 2 is a schematic diagram of a cleaning robot system according to an embodiment of the present disclosure;
Fig. 3 is a schematic diagram of a camera set according to an embodiment of the present disclosure;
Fig. 4 is a schematic diagram of a protective cap according to an embodiment of the present disclosure;
Fig. 5 is a schematic diagram showing an installation of a support assembly according to an embodiment of the present disclosure;
Fig. 6 is a schematic diagram showing an installation of a camera set according to an embodiment of the present disclosure;
Fig. 7 is a block diagram of a cleaning robot according to an embodiment of the present disclosure; and
Fig. 8 is a flow chart of a method for controlling a cleaning robot according to an embodiment of the present disclosure.

### DETAILED DESCRIPTION

Embodiments of the present disclosure will be described in details in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

A cleaning robot system, a cleaning robot and a method for controlling a cleaning robot provided in embodiments of the present disclosure are described below with reference to drawings.

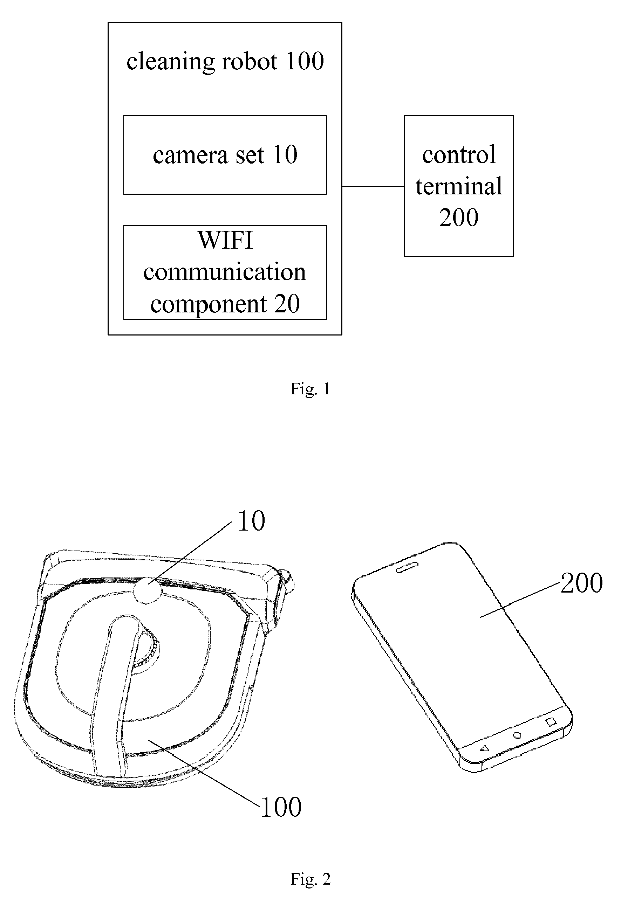

Fig.1 is a block diagram of a cleaning robot system according to an embodiment of the present disclosure. As shown in Fig. 1, the cleaning robot system includes a cleaning robot 100 and a control terminal 200.

The cleaning robot 100 includes a camera set 10 and a WIFI communication component 20. The camera set 10 is configured to shoot images around the cleaning robot 100 for generating panoramic image information. The WIFI communication component 20 is configured to generate a wireless communication between the cleaning robot 100 and the control terminal 200 so as to send the panoramic image information to the control terminal 200. The control terminal 200 is configured to perform wireless communication with the WIFI communication component 20 so as to receive the panoramic image information, and to generate a control instruction according to the panoramic image information for controlling the cleaning robot 100.

Specifically, as shown in Fig. 2, the camera set 10 may be installed at a top of the cleaning robot 100, the WIFI communication component 20 may be connected with the camera set 10 and disposed inside the cleaning robot 100, and a corresponding application may be installed in the control terminal 200 such as a mobile phone and a PDA. When the cleaning robot 100 is in operation, the camera set 10 shoot images around the cleaning robot 100 for generating the panoramic image information, and then the panoramic image information is sent to the control terminal 200 via the WIFI communication component 20, such that the user may observe the panoramic image information displayed on the control terminal 200 for controlling the cleaning robot 100.

Since the camera set 10 disposed on the cleaning robot 100 may monitor environment information around the cleaning robot 100 in real time and the WIFI communication has advantages of far transmission distance and good anti-interference performance, the user may control the cleaning robot 100 in real time remotely (such as on the sofa) and effectively, thus improving a safety and convenience of the cleaning robot 100 and improving user experience.

In at least one embodiment, the camera set 10 includes at least four single cameras 11 disposed circlewise on a body 30 of the cleaning robot 100 at a preset angle. The preset angle may be determined according to practical situations, and is reasonable as long as the single cameras 11 can shoot images around the cleaning robot 100 for generating the panoramic image information. For example, the preset angle may be equal to 360° divided by the number of the single cameras 11, i.e., the single cameras 11 are disposed evenly on the body 30 of the cleaning robot 100.

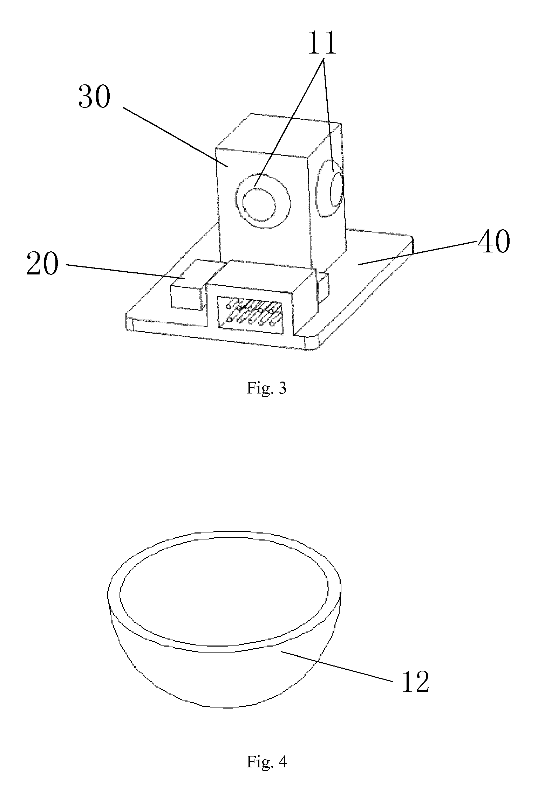

Specifically, as shown in Fig. 3, when there are four single cameras 11, the four single cameras 11 are disposed circlewise on the body 30 of the cleaning robot 100 at intervals of 90°. Referring to Fig. 3, only two of the four single cameras 11 are shown. Each of the four single cameras 11 is configure to shoot images within a range of 90° in a facing direction of the single camera 11, such that the panoramic image information is generated.

It should be understood that, in at least one embodiment, as shown in Fig. 3, the cleaning robot 100 may further include a control component 40. The control component 40 is provided with an image processing unit. The image processing unit is connected with each single camera 11, and configured to separately process images shot by each single camera 11. The control component 40 integrates processed images obtained by the image processing unit so as to generate the panoramic image information, and sends the panoramic image information to the control terminal 200 via the WIFI communication component 20. The control component 40 may also directly send the processed images obtained by the image processing unit to the control terminal 200 via the WIFI communication component 20, such that the corresponding application in the control terminal 200 is used to integrate the processed images of the at least four single cameras 11 for displaying a whole image on the screen.

In at least one embodiment, each single camera 11 has a protective cap 12. The protective cap 12 is made of transparent material, and is in a hemisphere form or in an approximate hemisphere form, as shown in Fig. 4.

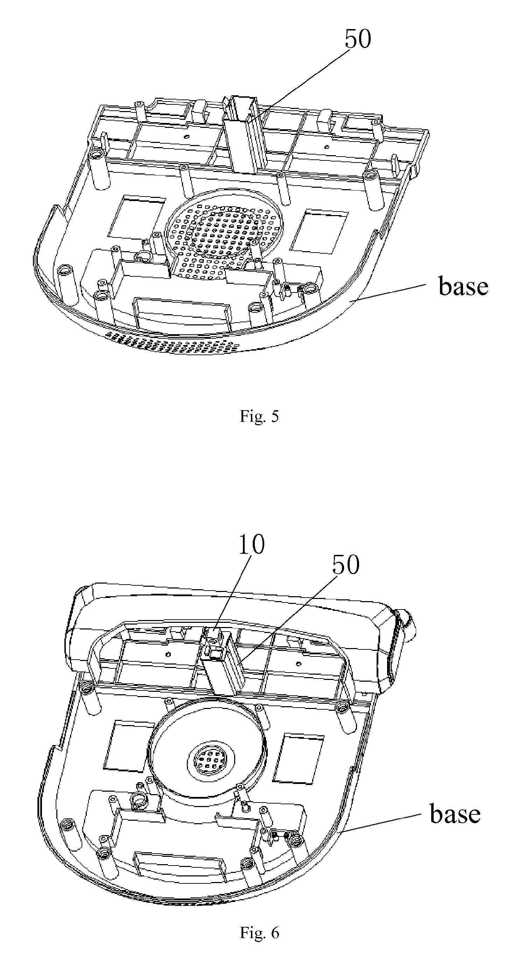

In at least one embodiment, as shown in Figs. 5 and 6, the cleaning robot 100 further includes a support assembly 50. The support assembly 50 is configured to install the camera set 10 onto a base of the cleaning robot 100.

In embodiments of the present disclosure, the cleaning robot 100 may be a window-cleaning robot. The user may control the window-cleaning robot easily by observing the panoramic image information displayed on the control terminal such as the mobile phone. Therefore, it is not only possible to clean higher windows, but also possible to control the window-cleaning robot to clean windows of different rooms at a same place such as on the sofa, thus improving user experience and the safety of the window-cleaning robot.

According to the cleaning robot system of embodiments of the present disclosure, the camera set 10 is used to shoot images around the cleaning robot 100 for generating the panoramic image information, and the WIFI communication component 20 is used to send the panoramic image information to the control terminal 200, such that the control terminal 200 receives the panoramic image information via the wireless communication with the WIFI communication component 20, and generates the control instruction according to the panoramic image information for controlling the cleaning robot 100. In this way, when the cleaning robot 100 is in operation, the user may control the cleaning robot 100 by observing the panoramic image information around the cleaning robot 100 displayed on the control terminal 200, thus enhancing the safety and convenience of the cleaning robot 100 and improving the user experience.

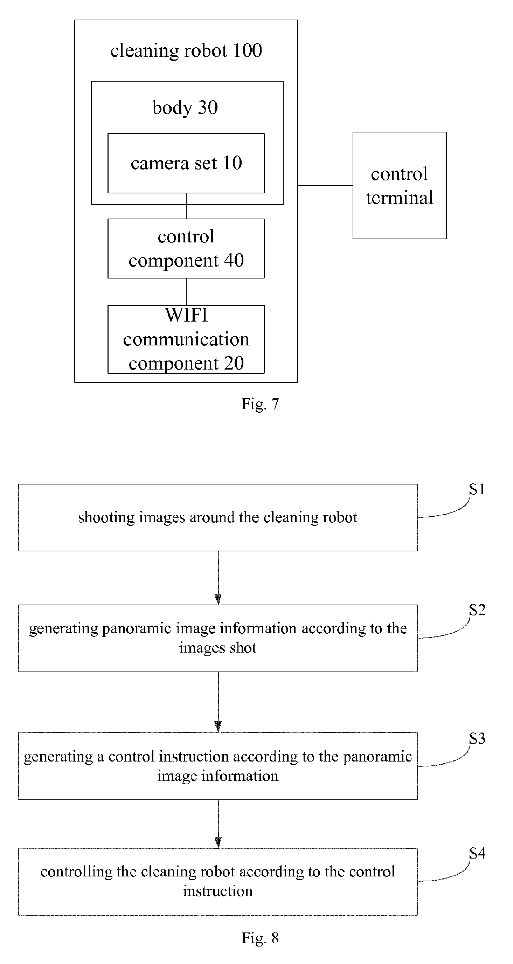

Fig. 7 is a block diagram of a cleaning robot according to an embodiment of the present disclosure. As shown in Fig. 7, the cleaning robot 100 includes a camera set 10, a WIFI communication component 20, a body 30 and a control component 40.

The camera set 10 is disposed on the body 30. The camera set 10 is configured to shoot images around the cleaning robot 100 for generating panoramic image information. The WIFI communication component 20 is configured to establish wireless communication with a control terminal. The control component 40 is connected with the camera set 10 and the WIFI communication component 20 respectively, and configured to generate panoramic image information according to the images shot by the camera set 10, to send the panoramic image information to the control terminal via the WIFI communication component 20, to receive a control instruction sent by the control terminal via the WIFI communication component 20, and to control the cleaning robot 100 according to the control instruction, in which the control instruction is generated according to the panoramic image information by the control terminal.

Specifically, as shown in Fig. 2, the camera set 10 may be installed at a top of the cleaning robot 100, the WIFI communication component 20 may be connected with the camera set 10 and disposed inside the cleaning robot 100, and a corresponding application may be installed in the control terminal such as a mobile phone and a PDA. When the cleaning robot 100 is in operation, the camera set 10 shoot images around the cleaning robot 100 for generating the panoramic image information, and then the panoramic image information is sent to the control terminal via the WIFI communication component 20, such that the user may observe the panoramic image information displayed on the control terminal for controlling the cleaning robot 100.

Since the camera set 10 disposed on the cleaning robot 100 may monitor environment information around the cleaning robot 100 in real time and the WIFI communication has advantages of far transmission distance and good anti-interference performance, the user may control the cleaning robot 100 in real time remotely (such as on the sofa) and effectively, thus improving a safety and convenience of the cleaning robot 100 and improving user experience.

In at least one embodiment, the camera set 10 includes at least four single cameras 11 disposed circlewise on the body 30 of the cleaning robot 100 at a preset angle. The preset angle may be determined according to practical situations, and is reasonable as long as the single cameras 11 can shoot images around the cleaning robot 100 for generating the panoramic image information. For example, the preset angle may be equal to 360° divided by the number of the single cameras 11, i.e., the single cameras 11 are disposed evenly on the body 30 of the cleaning robot 100.

Specifically, as shown in Fig. 3, when there are four single cameras 11, the four single cameras 11 are disposed circlewise on the body 30 of the cleaning robot 100 at intervals of 90°. Referring to Fig. 3, only two of the four single cameras 11 are shown. Each of the four single cameras 11 is configure to shoot images within a range of 90° in a facing direction of the single camera 11, such that the panoramic image information is generated.

It should be understood that, in at least one embodiment, as shown in Fig. 3, the cleaning robot 100 may further include a control component 40. The control component 40 is provided with an image processing unit. The image processing unit is connected with each single camera 11, and configured to separately process images shot by each single camera 11. The control component 40 integrates processed images obtained by the image processing unit so as to generate the panoramic image information, and sends the panoramic image information to the control terminal via the WIFI communication component 20. The control component 40 may also directly send the processed images obtained by the image processing unit to the control terminal via the WIFI communication component 20, such that the corresponding application in the control terminal is used to integrate the processed images of the at least four single cameras 11 for displaying a whole image on the screen.

In at least one embodiment, each single camera 11 has a protective cap 12. The protective cap 12 is made of transparent material, and is in a hemisphere form or in an approximate hemisphere form, as shown in Fig. 4.

In at least one embodiment, as shown in Figs. 5 and 6, the cleaning robot 100 further includes a support assembly 50. The support assembly 50 is configured to install the camera set 10 onto a base of the cleaning robot 100.

In embodiments of the present disclosure, the cleaning robot 100 may be a window-cleaning robot. The user may control the window-cleaning robot easily by observing the panoramic image information displayed on the control terminal such as the mobile phone. Therefore, it is not only possible to clean higher windows, but also possible to control the window-cleaning robot to clean windows of different rooms at a same place such as on the sofa, thus improving user experience and the safety of the window-cleaning robot.

According to the cleaning robot of embodiments of the present disclosure, the camera set 10 is used to shoot images around the cleaning robot 100 for generating the panoramic image information, and the WIFI communication component 20 is used to send the panoramic image information to the control terminal, such that the control terminal receives the panoramic image information via the wireless communication with the WIFI communication component 20, and generates the control instruction according to the panoramic image information for controlling the cleaning robot 100. In this way, when the cleaning robot 100 is in operation, the user may control the cleaning robot 100 by observing the panoramic image information around the cleaning robot 100 displayed on the control terminal, thus enhancing the safety and convenience of the cleaning robot 100 and improving the user experience.

Fig. 8 is a flow chart of a method for controlling a cleaning robot according to an embodiment of the present disclosure. As shown in Fig. 8, the method includes followings.

In block S1, images around the cleaning robot are shot.

In block S2, panoramic image information is generated according to the images shot in block S1.

In block S3, a control instruction is generated according to the panoramic image information.

In block S4, the cleaning robot is controlled according to the control instruction.

Regarding specific details of the method, reference may be made to the cleaning robot described above, which will not be elaborated herein.

According to embodiments of the present disclosure, a computer program is provided. The computer program, when executing on a processor, performs the above method according to embodiments of the present disclosure, which will not be elaborated herein.

It is to be understood that phraseology and terminology used herein with reference to device or element orientation (such as, terms like "longitudinal", "lateral", "up", "down", "front", "rear", "left", "right", "vertical", "horizontal", "top", "bottom", "inside", "outside") are only used to simplify description of the present invention, and do not indicate or imply that the device or element referred to must have or operated in a particular orientation. They cannot be seen as limits to the present disclosure.

Furthermore, terms "first" and "second" are merely used for explanation, and should not understood to indicate or imply relative importance or implicitly specify the number of features indicated. Therefore, a feature defined with "first" or "second" may explicitly or implicitly include at least one of the feature. In the specification, "a plurality of " refers to at least two, for example, two or three, unless otherwise defined explicitly.

Unless otherwise stipulated and restricted, it is to be explained that terms of "installation", "linkage" and "connection" shall be understood broadly, for example, it could be permanent connection, removable connection or integral connection; it could be direct linkage, indirect linkage or inside linkage within two elements. Those skilled in the art shall understand the concrete notations of the terms mentioned above according to specific circumstances.

In the description of the present disclosure, a structure in which a first feature is "on" a second feature may include an embodiment in which the first feature directly contacts the second feature, and may also include an embodiment in which an additional feature is formed between the first feature and the second feature so that the first feature does not directly contact the second feature, unless otherwise specified. Furthermore, a first feature "on," "above," or "on top of" a second feature may include an embodiment in which the first feature is right "on," "above," or "on top of" the second feature, and may also include an embodiment in which the first feature is not right "on," "above," or "on top of" the second feature, or just means that the first feature has a sea level elevation larger than the sea level elevation of the second feature. While first feature "beneath," "below," or "on bottom of" a second feature may include an embodiment in which the first feature is right "beneath," "below," or "on bottom of" the second feature, and may also include an embodiment in which the first feature is not right "beneath," "below," or "on bottom of" the second feature, or just means that the first feature has a sea level elevation smaller than the sea level elevation of the second feature.

Reference throughout this specification to "an embodiment", "some embodiments", "one schematic embodiment", "an example", "a specific examples", or "some examples" means that a particular feature, structure, material, or characteristic described in connection with the embodiment or example is included in at least one embodiment or example of the disclosure. Thus, the appearances of the phrases such as "in some embodiments", "in one embodiment", "in an embodiment", "an example", "a specific examples", or "some examples" in various places throughout this specification are not necessarily referring to the same embodiment or example of the disclosure. Furthermore, the particular features, structures, materials, or characteristics may be combined in any suitable manner in one or more embodiments or examples.

Although explanatory embodiments have been shown and described, it would be appreciated by those skilled in the art that changes, alternatives, and modifications may be made in the embodiments without departing from spirit and principles of the disclosure. The changes, alternatives, and modifications all fall into the scope of the claims and their equivalents.

## Claims

1. A cleaning robot system, comprising a cleaning robot (100) and a control terminal (200), wherein
the cleaning robot (100) comprises a camera set (10) and a WIFI communication component (20), the camera set (10) is configured to shoot images around the cleaning robot (100) so as to generate panoramic image information, and the WIFI communication component (20) is configured to generate a wireless communication between the cleaning robot (100) and the control terminal (200) so as to send the panoramic image information to the control terminal (200); and
the control terminal (200) is configured to perform wireless communication with the WIFI communication component (20) so as to receive the panoramic image information, and to generate a control instruction according to the panoramic image information for controlling the cleaning robot (100).

2. The cleaning robot system according to claim 1, wherein the camera set (10) comprises at least four single cameras (11) disposed circlewise on a body (30) of the cleaning robot (100) at a preset angle.

3. The cleaning robot system according to claim 2, wherein, the camera set (10) comprises four single cameras (11) disposed circlewise on the body (30) of the cleaning robot (100) at intervals of 90°, and each of the four single cameras (11) shoots images within a range of 90° in a facing direction of the single camera (11).

4. The cleaning robot system according to claim 2 or 3, wherein, each single camera (11) has a protective cap (12) made of transparent material and in a hemisphere form.

5. The cleaning robot system according to any one of claims 1-4, wherein, the cleaning robot (100) further comprises a support assembly (50) configured to install the camera set (10) onto a base of the cleaning robot (100).

6. The cleaning robot system according to any one of claims 1-5, wherein, the cleaning robot (100) comprises a window-cleaning robot.

7. A cleaning robot (100), comprising:
a body (30);
a camera set (10), disposed on the body (30) and configured to shoot images around the cleaning robot (100);
a WIFI communication component (20), configured to establish wireless communication with a control terminal; and
a control component (40), connected with the camera set (10) and the WIFI communication component (20) respectively, and configured to generate panoramic image information according to the images shot by the camera set (10), to send the panoramic image information to the control terminal via the WIFI communication component (20), to receive a control instruction sent by the control terminal via the WIFI communication component (20), and to control the cleaning robot (100) according to the control instruction, wherein the control instruction is generated according to the panoramic image information by the control terminal.

8. The cleaning robot according to claim 7, wherein, the camera set (10) comprises at least four single cameras (11) disposed circlewise on the body (30) of the cleaning robot (100) at a preset angle.

9. The cleaning robot according to claim 8, wherein, the camera set (10) comprises four single cameras (11) disposed circlewise on the body (30) of the cleaning robot (100) at intervals of 90°, and each of the four single cameras (11) shoots images within a range of 90° in a facing direction of the single camera (11).

10. The cleaning robot according to claim 8 or 9, wherein, each single camera (11) has a protective cap (12) made of transparent material and in a hemisphere form.

11. The cleaning robot according to any one of claims 7-10, further comprising:
a support assembly (50), configured to install the camera set (10) onto a base of the cleaning robot (100).

12. The cleaning robot according to any one of claims 7-11, wherein, the cleaning robot (100) comprises a window-cleaning robot.

13. A method for controlling a cleaning robot, comprising:
shooting (S1) images around the cleaning robot;
generating (S2) panoramic image information according to the images;
generating (S3) a control instruction according to the panoramic image information; and
controlling (S4) the cleaning robot according to the control instruction.

14. A computer program, which when executing on a processor, performs the method according to claim 13.
